# EUROPEAN PATENT APPLICATION

(11) **EP 4 607 672 A1**
(43) Date of publication of application: **27.08.2025**
(21) Application number: 24856633.3
(22) Date of filing: 27.06.2024
(51) Int. Cl.: H01M 50/244, H01M 10/04, H01M 50/502, H01M 50/211

(54) **BATTERY MODULE AND BATTERY PACK INCLUDING SAME**

(30) Priority: 22.08.2023 KR 20230109681
(71) Applicant: LG Energy Solution, Ltd., Seoul 07335 (KR)
(72) Inventor: KIM, Ji Hwan, Daejeon 34122 (KR); PARK, Sanggab, Daejeon 34122 (KR); LEE, Hyunjae, Daejeon 34122 (KR); LEE, Subin, Daejeon 34122 (KR)
(74) Representative: BCKIP Part mbB
(86) International application number: PCT/KR2024/008944
(87) International publication number: WO 2025/042018

(57) **Abstract**

A battery module according to an embodiment of the present disclosure includes: a battery cell stack in which a plurality of battery cells are stacked; a module frame that houses the battery cell stack and is opened on one surface and the other surface facing each other; and end plates that cover each of the one surface and the other surface of the module frame. The module frame includes a first joint surface formed on sides constituting the one surface and the other surface respectively, and the end plate includes a second joint surface joined to the first joint surface. A first rib is formed in any one of the end plate and the module frame, with the first rib protruding while being located inner than the portion where the first joint surface and the second joint surface are joined, and a second rib is formed on one surface of the first rib along the protruding direction of the first rib. A recessed part is formed in the other one of the end plate and the module frame, with the recessed part having a recessed shape so as to correspond to the first rib and the second rib.

## Description

### [TECHNICAL FIELD]

### Cross Citation with Related Application(s)

This application claims the benefit of Korean Patent Application No. 10-2023-0109681 filed on August 22, 2023 in the Korean Intellectual Property Office, the disclosure of which is incorporated herein by reference in its entirety.

The present disclosure relates to a battery module and a battery pack including the same, and more particularly, to a battery module having improved safety and productivity, and a battery pack including the same.

### [BACKGROUND]

In modern society, as portable devices such as a mobile phone, a notebook computer, a camcorder and a digital camera have been daily used, technologies of a field related to the mobile devices has been actively developed. In addition, as a secondary battery capable of being charged and discharged is used as a power source for an electric vehicle(EV), a hybrid electric vehicle(HEV), a plug-in hybrid electric vehicle(P-HEV) and the like as a method for solving air pollution and the like caused by existing gasoline vehicles using fossil fuel, a necessity for the development of the secondary battery is increasing.

Currently commercialized secondary batteries include a nickel cadmium battery, a nickel hydrogen battery, a nickel zinc battery, a lithium secondary battery, and the like, and among them, the lithium secondary battery has come into the spotlight because it has advantages, for example, hardly exhibiting memory effects compared to nickel-based secondary batteries and thus being freely charged and discharged, and having very low self-discharge rate and high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are arranged with a separator interposed between them, and a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

In the case of a secondary battery used for small-sized devices, two to three battery cells are arranged, but in the case of a secondary battery used for a medium- or large-sized device such as automobile, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a battery management system (BMS), a battery disconnect unit (BDU), and a cooling system to form a battery pack.

Since the medium- or large-sized battery module is preferably manufactured with as small a size and weight as possible, a prismatic battery, a pouch-type battery, or the like, which can be stacked with a high degree of integration and has a small weight relative to capacity, is mainly used as a battery cell of the medium- or large-sized battery module.

On the other hand, the battery module may include a module frame and an end plate that house a battery cell stack composed of a plurality of battery cells in an internal space to protect the plurality of battery cells from external impact, heat, or vibration.

Generally, in order to join the module frame and the end plate, welding is performed on the joint surface while the module frame and the end plate are placed facing each other. At this time, internal components including battery cells may be damaged due to weld spatters during the welding process. Therefore, there is a need to for a technology that can solve these problems of the prior art.

### [DETAILED DESCRIPTION OF THE INVENTION]

### [Technical Problem]

It is an object of the present disclosure to provide a battery module capable of protecting internal components during welding of a module frame and an end plate, and a battery pack including the same.

However, the technical object of the present disclosure is not limited to the aforementioned one, and may be extended in various ways within the scope of the technical idea included in the present disclosure.

### [Technical Solution]

According to one embodiment of the present disclosure, there is provided a battery module comprising: a battery cell stack in which a plurality of battery cells are stacked; a module frame that houses the battery cell stack and is opened on one surface and the other surface facing each other; and end plates that cover each of the one surface and the other surface of the module frame, wherein the module frame includes a first joint surface formed on sides constituting the one surface and the other surface respectively, wherein the end plate includes a second joint surface joined to the first joint surface, wherein a first rib is formed in any one of the end plate and the module frame, with the first rib protruding while being located inner than the portion where the first joint surface and the second joint surface are joined, and a second rib is formed on one surface of the first rib along the protruding direction of the first rib, and wherein a recessed part is formed in the other one of the end plate and the module frame, with the recessed part having a recessed shape so as to correspond to the first rib and the second rib.

The second rib has a width narrower than that of the first rib and is formed to protrude along the protruding direction of the first rib.

Paths that are folded in plural numbers are formed on the surface where the first rib and the second rib face the recessed part.

The recessed part may have a recessed shape so as to correspond to a step structure formed at the boundary between the first rib and the second rib.

The first rib and the second rib may cover a portion where the first joint surface and the second joint surface are joined in an internal space of the module frame.

The first rib and the second rib may be extended along the direction in which the first joint surface and the second joint surface are extended.

The battery module may further comprise at least one busbar frame that covers one surface or both surfaces of the battery cell stack.

The first rib and the second rib may be located between the portion where the first joint surface and the second joint surface are joined and the busbar frame.

A busbar connected to an electrode lead extending from the battery cell may be mounted on the busbar frame.

The first rib and the second rib may be formed on the end plate, the recessed part may be formed on the module frame, and the first rib may protrude from the end plate in a direction in which the battery cell stack is located.

The first rib and the second rib may be formed on the module frame, the recessed part mayh be formed on the end plate, and the first rib may protrude from the module frame in a direction in which the end plate is located.

According to another embodiment of the present disclosure, there is provided a battery pack comprising the battery module.

### [Advantageous Effects]

According to embodiments of the present disclosure, since the structures of the first and second ribs and a recessed part corresponding thereto are provided in an end plate and a module frame, the path through which weld spatter generated during welding of the module frame and the end plate flows in becomes complicated, and the distance of the inflow path increases. This makes it possible to prevent weld spatter from damaging the internal components of the battery module.

The effects of the present disclosure are not limited to the effects mentioned above and additional other effects not described above will be clearly understood from the detailed description of the appended claims by those skilled in the art.

### [BRIEF DESCRIPTION OF THE DRAWINGS]

FIG. 1 is a perspective view showing a battery module according to one embodiment of the present disclosure;
FIG. 2 is an exploded perspective view of the battery module of FIG. 1;
FIG. 3 is a plan view showing one of the battery cells included in the battery module of FIG. 2;
FIG. 4 is a perspective view showing a module frame according to one embodiment of the present disclosure;
FIG. 5 is an exploded perspective view of the module frame of FIG. 4;
FIG. 6(a) and (b) are a perspective view and a plan view which enlarge and show the portion "B" of FIG. 5, respectively;
FIG. 7 is a perspective view showing an end plate and an insulating cover according to one embodiment of the present disclosure;
FIG. 8 is a perspective view showing a state where the end plate and the insulating cover of FIG. 7 are coupled;
FIG. 9 is a perspective view of the end plate and the insulating cover of FIG. 8 as viewed from a different angle;
FIG. 10 is a partial diagram which enlarges and shows the portion "C" of FIG. 9;
FIG. 11 is a plan view of the portion "C" of FIG. 9 as viewed from above.
FIG. 12 is a cross-sectional view showing a cross section cut along the cutting line A-A' of FIG. 1;
FIG. 13 is a cross-sectional view of a battery module according to a comparative example of the present disclosure; and
FIG. 14 is a cross-sectional view of a battery module according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

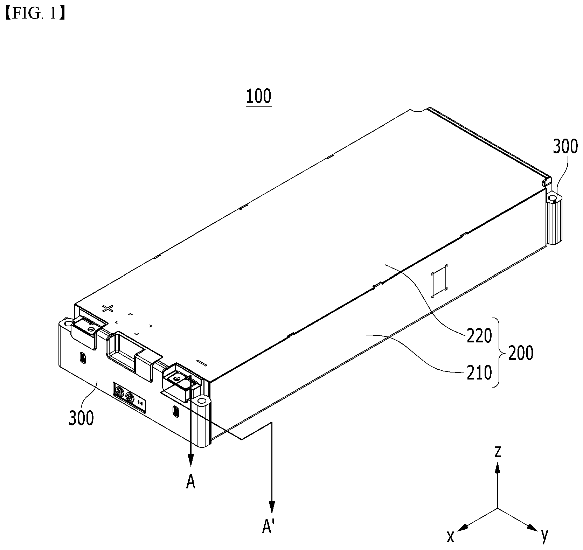

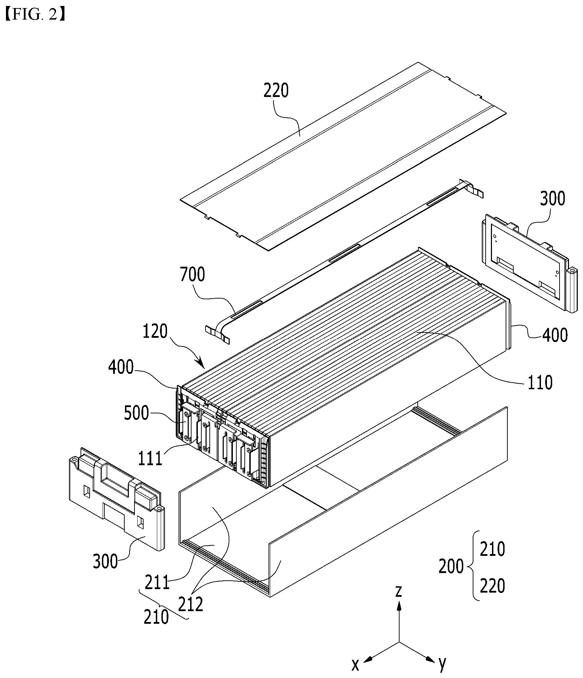

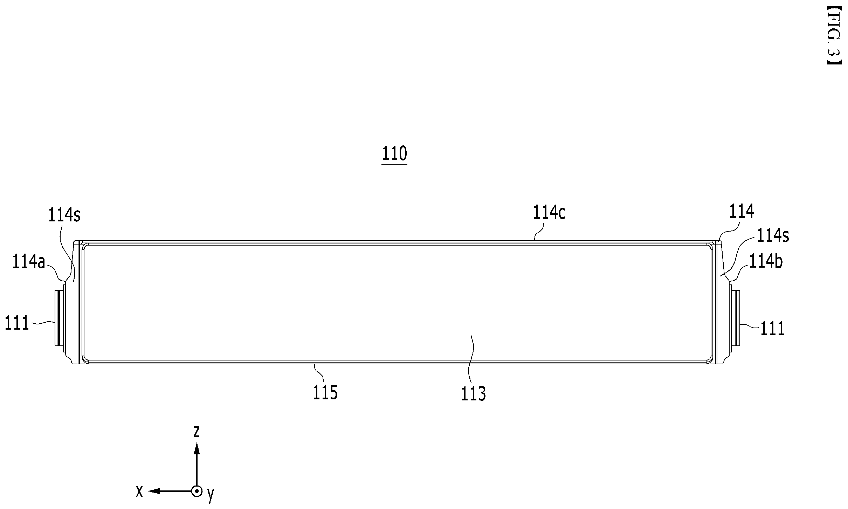

FIG. 1 is a perspective view showing a battery module according to one embodiment of the present disclosure. FIG. 2 is an exploded perspective view of the battery module of FIG. 1. FIG. 3 is a plan view showing one of the battery cells included in the battery module of FIG. 2.

Referring to FIGS. 1 to 3, a battery module 100 according to one embodiment of the present disclosure includes: a battery cell stack 120 in which a plurality of battery cells 110 are stacked; a module frame 200 that houses the battery cell stack 120 and is opened on one surface and the other surface facing each other; and end plates 300 that cover the one surface and the other surface of the module frame 200 respectively.

That is, the battery cell stack 120 can be housed in an internal space formed by the module frame 200 and the end plate 300. In addition, considering that the module frame 200 has a hexahedral structure, one surface and the other surface of the module frame 200 facing the electrode leads 111 of the battery cells 110 may be opened.

If the battery cells 110 according to the present embodiment are gathered in plurality, the types thereof are not particularly limited. That is, the battery cells 110 according to the present embodiment may be a pouch-type battery cell, a prismatic battery cell, or a cylindrical battery cell. As one example, the battery cell 110 according to the present embodiment is described below as pouch-type battery cells.

A battery cell 110 according to one embodiment of the present disclosure may be a pouch-type battery in which an electrode assembly having electrode leads 111 protruding in one direction or in both directions is housed in a pouch case 114. The battery cell 110 may be formed in a rectangular sheet-like structure. The battery cell 110 may be formed by housing an electrode assembly in a pouch case 114 made of a laminate sheet including a resin layer and a metal layer, and then adhering the outer peripheral part of the pouch case 114. As an example, the battery cell 110 may have a structure in which two electrode leads 111 face each other and protrude from one end 114a and the other end 114b of the cell main body 113. As another example, a structure in which all the electrode leads 111 of the battery cells 110 protrude in one direction is also possible. One of the electrode leads 111 is a positive electrode lead, and the other one is a negative electrode lead.

The battery cell 110 can be produced by joining both end parts 114a and 114b of a pouch case 114 and one side part 114c connecting them in a state in which an electrode assembly (not shown) is housed in a pouch case 114. In other words, the battery cell 110 according to one embodiment of the present disclosure has a total of three sealing parts 114s, wherein the sealing parts 114s have a structure that is sealed by a method such as fusion, and the remaining other one side part may be composed of a folding part 115. That is, the battery cell 110 according to the present embodiment may have a structure in which the electrode assembly is housed inside the pouch case 114, wherein the pouch case 114 has a sealing part 114s formed by sealing the outer peripheral part of the portion where the electrode assembly is housed. In FIG. 3, only a state in which the sealing parts 114s are formed at both end parts 114a and 114b of the pouch case 114 are illustrated, and the sealing part is not illustrated on the upper side facing the folding part 115, i.e., at one side part 114c, however, the sealing part of one side part 114c may be in a state being folded to one side after sealing is completed for space utilization.

The pouch case 114 of the laminate sheet may include an inner resin layer for sealing, a metal layer for preventing penetration of materials, and an outer resin layer located on the outermost side. Based on the electrode assembly inside the pouch case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can have electrical insulation properties in order to protect the electrode assembly from the outside. Such an outer resin layer may include a polyethylene terephthalate(PET) resin or a nylon resin. The metal layer can prevent air, moisture, and the like from flowing into the pouch-type secondary battery. This metal layer may include aluminum(Al). The inner resin layers may be heat-sealed to each other by heat and/or pressure applied in a state in which the electrode assembly is embedded. This inner resin layer may include casted polypropylene(CPP) or polypropylene(PP).

The pouch case 114 is divided into two portions, and a concave-shaped housing part in which the electrode assembly can be seated may be formed in at least one of the two portions. Along the outer circumference of this housing part, the inner resin layers of the two portions of the pouch case 114 may be joined to each other to provide a sealing part 114s. The pouch case is sealed in this manner, so that the battery cell 110, which is a pouch-type secondary battery, can be produced.

The battery cells 110 may be configured in plural numbers, and the plurality of battery cells 110 may be stacked along one direction so as to be electrically connected to each other, thereby forming a battery cell stack 120. In particular, as shown in FIG. 2, a plurality of battery cells 110 may be stacked in an upright state along a direction parallel to the y-axis so as to make side surfaces of the cell main body 113 (see FIG. 3) face each other. Thereby, the electrode leads 111 may protrude in a direction perpendicular to the direction in which the battery cells 110 are stacked. That is, in the battery cell 110, one electrode lead 111 may protrude toward the x-axis direction, and the other electrode lead 111 may protrude toward the -x-axis direction.

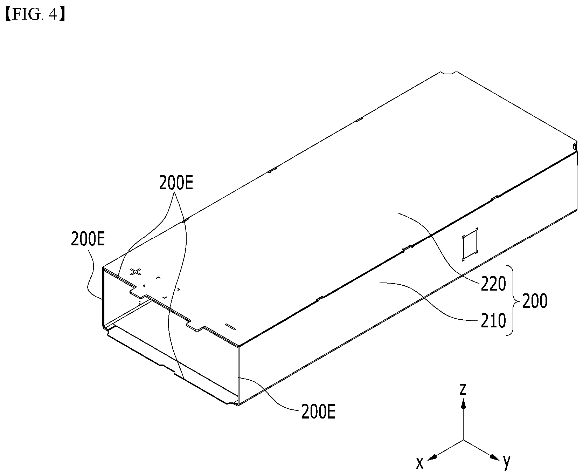

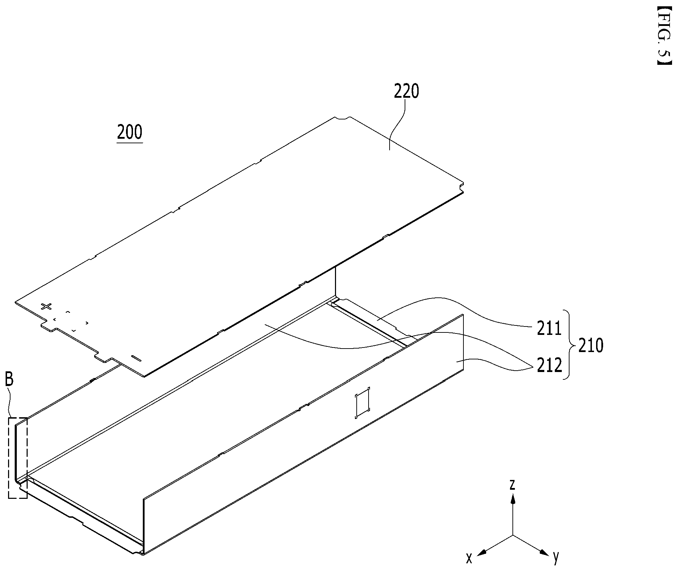

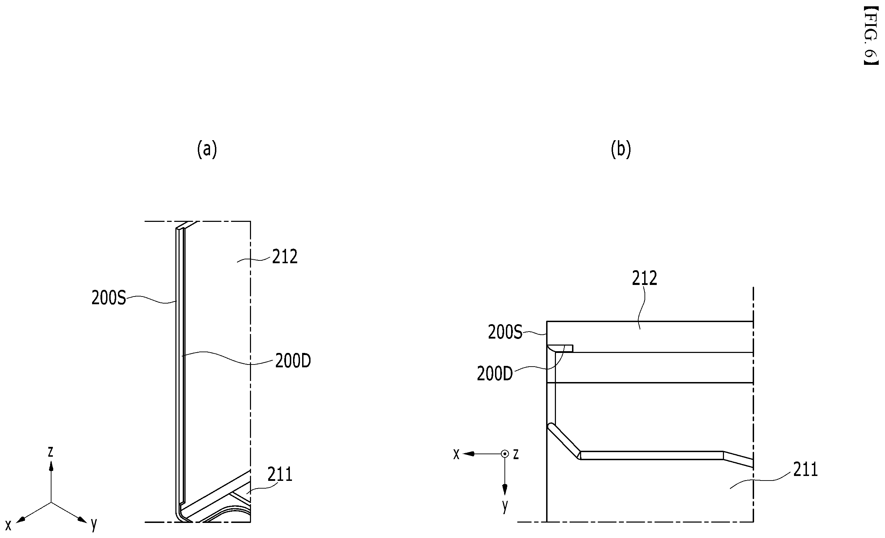

FIG. 4 is a perspective view showing a module frame according to one embodiment of the present disclosure. FIG. 5 is an exploded perspective view of the module frame of FIG. 4. FIG. 6(a) and (b) are a perspective view and a plan view which enlarge and show the portion "B" of FIG. 5, respectively. That is, FIG. 6(a) is a perspective view which enlarges and shows the portion "B" of FIG. 5, and FIG. 6(b) is a plan view of the portion "B" of FIG. 5 as viewed along the -z axis direction on the xy plane.

Referring to FIGS. 2, 4 to 6 together, the module frame 200 may be a structure in which one surface and the other surface opposite to the one surface are opened. More specifically, the module frame 200 may be opened in both directions in which the electrode leads 111 protrude with respect to the battery cell stack 120.

The module frame 200 according to an embodiment of the present disclosure may include a U-shaped frame 210 that covers the lower surface and both side surfaces of the battery cell stack 120 and an upper cover 220 that covers the open upper surface of the U-shaped frame 210. The U-shaped frame 210 may include a bottom part 211 and two side surface parts 212 extending upward from opposite both sides of the bottom part 211. The U-shaped frame 210 and the upper cover 220 may be joined to each other between corresponding edges. More specifically, the two side surface parts 212 of the U-shaped frame 210 may be joined to both sides of the upper cover 220.

Further, as another embodiment of the present disclosure, the module frame may be in the form of a mono frame integrated with the upper surface, the lower surface, and both side surfaces.

The module frame 200 according to the present embodiment includes a first j oint surface 200S formed on the sides 200E constituting the open one surface and the open other surface respectively. The first joint surface 200S of the module frame 200 corresponds to a portion joined to the second joint surface 300S of the end plate 300 described below. The first joint surface 200S may be formed on the four sides 200E of the open one surface of the module frame 200. Although not shown in the figure, the first joint surface 200S may also be formed on all four sides of the other open surface of the module frame 200. Meanwhile, the structure of the first and second ribs or recessed parts that may be formed on the module frame 200 will be described below.

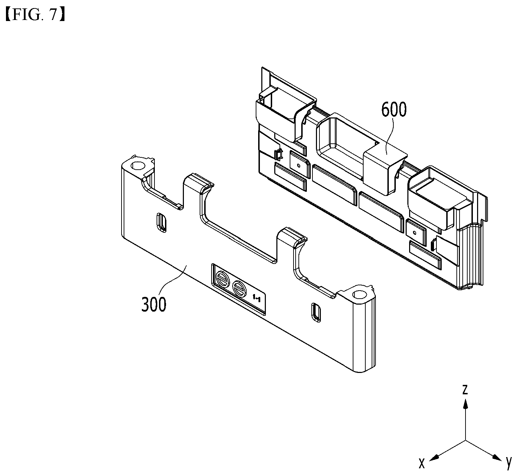

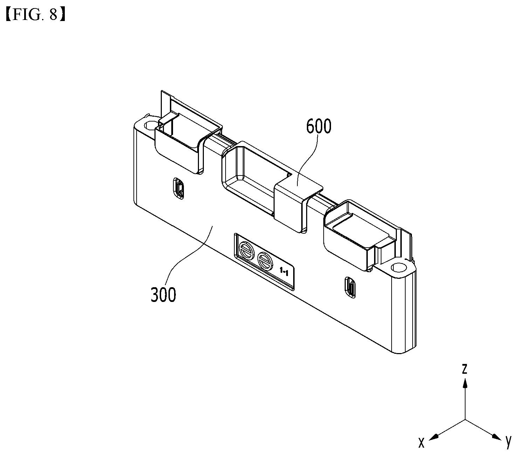

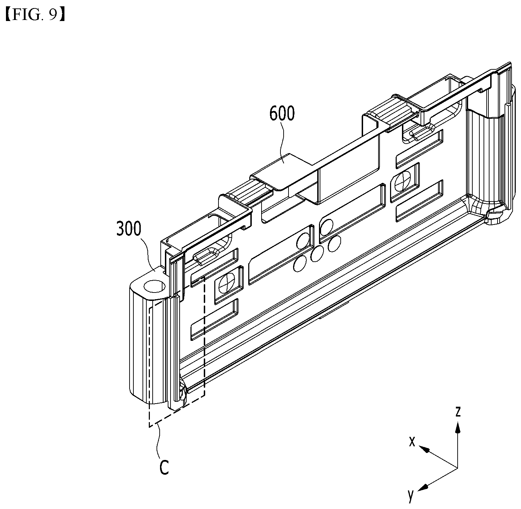

FIG. 7 is a perspective view showing an end plate and an insulating cover according to one embodiment of the present disclosure. FIG. 8 is a perspective view showing a state where the end plate and the insulating cover of FIG. 7 are coupled. FIG. 9 is a perspective view of the end plate and the insulating cover of FIG. 8 as viewed from a different angle.

Referring to FIGS. 2, 7 to 9, the end plates 300 according to one embodiment of the present disclosure cover the open one surface and the other surface of the module frame 200, respectively. The module frame 200 and the end plate 300 may include a metal material having a predetermined strength and may protect the battery cell stack 120 housed in the internal space thereof from external impact or vibration. In addition, in order to prevent the end plate 300 from coming into contact with the electrode lead or the busbar to cause a risk of short circuit or the like, an insulating cover 600 may be interposed between the battery cell stack 120 and the end plate 300. Such an insulating cover 600 include an electrically insulating material.

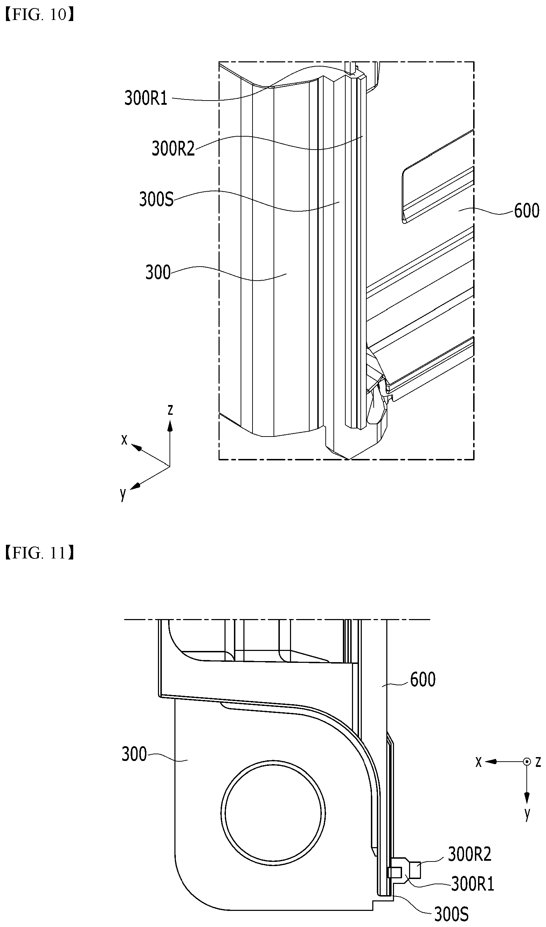

FIG. 10 is a partial diagram which enlarges and shows the portion "C" of FIG. 9. FIG. 11 is a plan view of the portion "C" of FIG. 9 as viewed from above.

Referring to FIG. 2 and FIGS. 9 to 11, the end plate 300 includes a second joint surface 300S that is joined to the first joint surface 200S (see FIG. 6) of the module frame 200.

When the end plates 300 cover the open one surface and the other surface of the module frame 200, the second joint surface 300S of the end plate 300 is a portion that faces each other to the first joint surface 200S of the module frame and corresponds to the first joint surface 200S of the module frame.

The first joint surface 200S of the module frame 200 and the second joint surface 300S of the end plate are joined while being abutted on each other. More specifically, welding is performed in a state in which the first joint surface 200S of the module frame 200 and the second joint surface 300S of the end plate 300 abut on each other, so that the end plate 300 can be joined to the module frame 200.

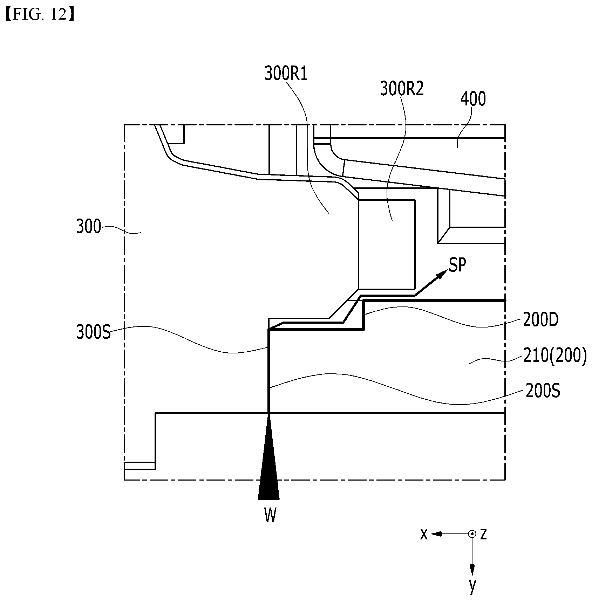

FIG. 12 is a cross-sectional view showing a cross section cut along the cutting line A-A' of FIG. 1.

Referring to FIGS. 2, 5, 6, 9 to 12, in this embodiment, a first rib 300R1 is formed in any one of the end plate 300 and the module frame 200, wherein the first rib protrudes while being located inner than the portion where the first joint surface 200S and the second joint surface 300S are joined. In addition, a second rib 300R2 is formed on one surface of the first rib 300R1 in accordance with the protruding direction of the first rib 300R1. Further, a recessed part 200D is formed on the other one of the end plate 300 and the module frame 200, wherein the recessed part has a recessed shape so as to correspond to the first rib 300R1 and the second rib 300R2.

That is, in one embodiment of the present disclosure, a first rib 300R1 and a second rib 300R2 may be formed in the end plate 300, and a recessed part 200D may be formed in the module frame 200. In addition, in another embodiment of the present disclosure, a first rib and a second rib may be formed in the module frame, and a recessed part may be formed in the end plate.

On the other hand, "the first rib 300R1 is located inner than the portion where the first joint surface 200S and the second joint surface 300S are joined" means that based on the internal space of the module frame 200 in which the battery cell stack 120 is housed, the first rib 300R1 is located closer to the battery cell stack 120 than the portion where the first joint surface 200S and the second joint surface 300S are joined.

As an embodiment of the present disclosure, the following description is made for an embodiment in which a first rib 300R1 and a second rib 300R2 are formed on an end plate 300 and a recessed part 200D is formed on a module frame 200.

In this embodiment, the first rib 300R1 may protrude from the end plate 300 in the direction in which the battery cell stack 120 is located. For example, the first rib 300R1 formed on the end plate 300 located in the x-axis direction in the battery cell stack 120 may protrude toward the -x-axis direction, and the first rib 300R1 formed on the end plate 300 located in the -x-axis direction in the battery cell stack 120 may protrude toward the x-axis direction. On the other hand, as described above, the second rib 300R2 protrudes from one surface of the first rib 300R1 along a direction parallel to the protruding direction of the first rib 300R1.

As described above, during the process of welding(W) the first joint surface 200S of the module frame 200 and the second joint surface 300S of the end plate to each other, a weld spatter(SP) phenomenon may occur in which welding sparks scatter in all directions, and such weld spatter(SP) may damage the battery cells 110 or other electrical components inside the battery module 100. In addition, when a laser beam is applied to the portion where the first joint surface 200S and the second joint surface 300S abut for welding(W), such laser beam may transmit through the module frame 200 and the end plate 300, and damage the battery cells 110 or other internal components. However, the first rib 300R1 and the second rib 300R2 according to the present embodiment can block weld spatter(SP) or a transmitted laser beam from affecting the battery cells 110 or other internal components.

In particular, the first rib 300R1 and the second rib 300R2 can cover the portion where the first joint surface 200S and the second joint surface 300S are joined in an internal space of the module frame 200. In addition, the first rib 300R1 and the second rib 300R2 can be extended along the direction in which the first joint surface 200S and the second joint surface 300S are extended. Here, the direction in which the first joint surface 200S and the second joint surface 300S are extended is the same as the direction in which the sides 200E (see FIG. 4) constituting the open one surface and the other surface of the module frame 200 respectively are extended.

In addition, the first rib 300R1 and the second rib 300R2 according to one embodiment of the present disclosure may be formed to cover the entire region of the portion where the first joint surface 200S and the second joint surface 300S are joined. On the other hand, the first rib 300R1 and the second rib 300R2 according to another embodiment of the present disclosure may be formed to cover only a part of the portion where the first joint surface 200S and the second joint surface 300S are joined.

In addition, it is preferable that the welding(W) is performed while the module frame 200 and the end plate 300 are fixed to correspond to fixed positions predetermined each other. In this embodiment, when the end plate 300 is coupled with the module frame 200, the first rib 300R1 and the second rib 300R2 are inserted into an inner space of the module frame 200, so that the end plate 300 can be coupled in the correct position without being misaligned. That is, the first rib 300R1 and the second rib 300R2 serves to improve the temporary assembly property between the module frame 200 and the end plate 300.

In addition, even while welding (W) is in progress, the end plate 300 can be fixed to a fixed position by the first rib 300R1 and the second rib 300R2. The first rib 300R1 and the second rib 300R2 must be located adjacent to the first joint surface 200S and the second joint surface 300S, which is effective in preventing the end plate 300 from being detached and in fixing it.

Furthermore, the first rib 300R1 and the second rib 300R2 can prevent occurrence of distortion at the welding portion due to the heat generated, and even if slight distortion occurs, the distorted or protruded area at the welding portion can prevent the battery cell stack and other internal components from being affected.

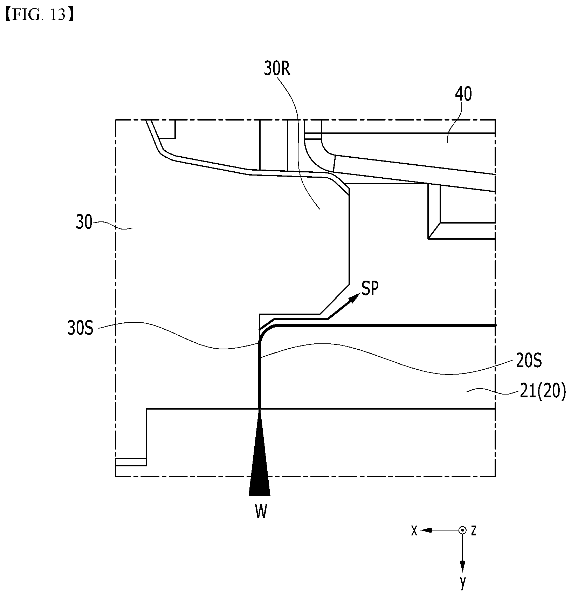

FIG. 13 is a cross-sectional view of a battery module according to a comparative example of the present disclosure. In particular, FIG. 13 may correspond to a cross-sectional view of the same portion as FIG. 12 in the battery module according to a comparative example of the present disclosure.

Referring to Fig. 13, a rib 30R is formed on the end plate 30 according to a comparative example of the present disclosure. Specifically, welding(W) is performed between the first joint surface 20S of the module frame 20 and the second joint surface 30S of the end plate 30, and the rib 30R of the end plate 30 is located inner than the portion where the first joint surface 20S of the module frame 20 and the second joint surface 30S of the end plate 30 are joined. The comparative example of FIG. 13 is the same as the configuration in which the second rib 300R2 and the recessed part 200D are not provided in the embodiment of FIG. 12.

Although the rib 30R according to this comparative example can primarily block weld spatter(SP), most of the weld spatter(SP) can flow into the inside of the module frame 20 along a gap between the rib 30R and the U-shaped frame 21 portion of the module frame 20, and eventually damage the battery cells.

On the other hand, referring again to FIG. 12, in this embodiment, a second rib 300R2 is added to one surface of the first rib 300R1, and a recessed part 200D having a recessed shape so as to correspond to the first rib 300R1 and the second rib 300R2 is provided. The second rib 300R2 may be formed to protrude in the protruding direction of the first rib 300R1 while having a width narrower than that of the first rib 300R1. Further, the recessed part 200D may have a recessed shape so as to correspond to the step structure formed at a boundary between the first rib 300R1 and the second rib 300R2.

Unlike the rib 30R according to the comparative example, in this embodiment, the second rib 300R2 and the recessed part 200D are further provided, so that the path through which the weld spatter(SP) flows in becomes complicated, and the distance of the inflow path also increases. A path that is bent plural times can be formed on the surface where the first rib 300R1 and the second rib 300R2 face the recessed part 200D.

In this embodiment, since the path through which weld spatter(SP) flows in becomes complicated and the distance of the inflow path increases, it is effective in blocking the inflow of weld spatter(SP). In particular, since weld spatter(SP) has strong straight property, if the path becomes complicated by bending multiple times as described above, the amount of weld spatter(SP) flowing inward can be greatly reduced.

On the other hand, the first rib 300R1 and the second rib 300R2 may have a structure integrated with the end plate 300, and the end plate 300 comprising the first rib 300R1 and the second rib 300R2 may be manufactured by molding. Since this does not join a predetermined rib-shaped structure, it does not require a separate joining process. Furthermore, a U-shaped frame 210 and an upper cover 220 of the module frame 200 may be formed by molding, thereby providing a recessed part 200D.

Referring again to FIGS. 1, 2 and 12, the battery module 100 according to the present embodiment may include at least one busbar frame 400 that covers one surface or both surfaces of the battery cell stack 120.

As an example, two busbar frames 400 may be located on both sides of the battery cell stack 120, and as another example, one busbar frame 400 may be located on one side of the battery cell stack 120. The busbar frame 400 may be located between the battery cell stack 120 and the insulating cover 600, and may include an electrically insulating material.

The busbar frame 400 may be equipped with a busbar 500 connected to an electrode lead 111 extending from a battery cell 110 for electrical connection between the battery cells 110. Specifically, the busbar 500 may be equipped on the opposite side of the side of the busbar frame 400 that faces the battery cell stack 120.

The busbar 500 is for electrically connecting the battery cells 110 inside the battery module 100, and preferably includes a metal material so as to enable electrical connection. Electrode leads 111 extending from the battery cells 110 may be bent after passing through a slit formed in the busbar frame 400 and connected to the busbar 500. As an example, one electrode lead 111 may be bent after passing through a slit of a busbar frame 400 located on one side of the battery cell stack 120 and connected to the busbar 500, and the other electrode lead 111 can pass through a slit of the other busbar frame 400 located on the other side of the battery cell stack 120 and bent and then be connected to the other busbar 500. The connection method between the electrode lead 111 and the busbar is not particularly limited, and as an example, weld-joining may be performed. As the electrode leads 111 of the battery cells 110 are connected to the busbar in this way, the battery cells 110 may be electrically connected to each other via the busbar. In this manner, a HV (High Voltage) connection may be performed within the battery module 100. In addition, a connecting part 700 may be further arranged for electrical connection between the electrical components mounted on each of the busbar frames 400 located on one side and the other side of the battery cell stack 120. This connecting part 700 may be a flexible printed circuit board(FPCB) or a flexible flat cable(FFC).

At this time, the first rib 300R1 and the second rib 300R2 may be located between the portion where the first joint surface 200S and the second joint surface 300S are joined and the busbar frame 400. The first rib 300R1 and the second rib 300R2 according to the present embodiment may prevent weld spatter(SP) or a transmitted laser beam from damaging the busbar frame 400.

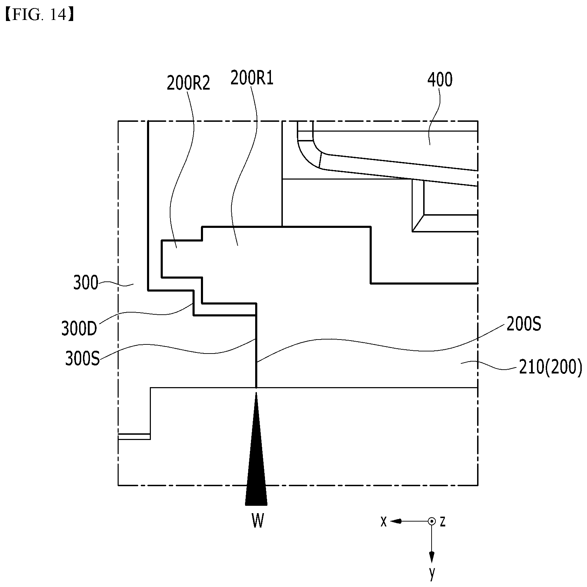

Next, a battery module according to another embodiment of the present disclosure will be described with reference to FIG. 14 and the like. However, portions overlapping with the contents previously described are omitted for convenience of explanation.

FIG. 14 is a cross-sectional view of a battery module according to another embodiment of the present disclosure. In particular, FIG. 14 may correspond to a cross-sectional view of the same portion as FIG. 12 in a battery module according to another embodiment of the present disclosure.

Referring to FIG. 14, the first joint surface 200S of the module frame 200 and the second joint surface 300S of the end plate 300 are joined, wherein a first rib 200R1 and a second rib 200R2 may be formed in the module frame 200, and a recessed part 300D may be formed in the end plate 300. The first rib 200R1 formed in the module frame 200 may protrude from the module frame 200 in the direction in which the end plate 300 is located. The second rib 200R2 may protrude from one surface of the first rib 200R1 along a direction parallel to the protruding direction of the first rib 200R1.

As described above, during the process of welding(W) the first joint surface 200S of the module frame 200 and the second joint surface 300S of the end plate 300 to each other, a weld spatter (SP) phenomenon may occur in which welding sparks scatter in all directions. The first rib 200R1 and the second rib 200R2 can block weld spatter (SP) or transmitted laser beams from affecting the battery cells 110 or other internal components.

In addition, depending on the structure of the second rib 200R2 and the recessed part 300D, the path through which weld spatter (SP) flows in becomes complicated and the distance of the inflow path increases, which is effective in blocking inflow of weld spatter (SP). In particular, since weld spatter (SP) has strong straight property, if the path becomes complicated by being bent plural times as described above, the amount of weld spatter (SP) flowing into the interior can be greatly reduced.

The embodiment of FIG. 14 is different from the embodiment of FIG. 12 in that the first rib 200R1 and the second rib 200R2 are formed on the module frame 200 rather than the end plate, and the recessed part 300D is formed on the end plate 300 rather than the module frame. However, the function or effect of the first rib 200R1, the second rib 200R2, and the recessed part 300D is not different between the embodiment of FIG. 14 and the embodiment of FIG. 12. That is, in the embodiment of FIG. 14, the inflow path of weld spatter(SP) becomes complicated, and the distance of the inflow path also increases. Therefore, a detailed description of the functions and effects of the embodiment of FIG. 14 overlaps with the contents set forth above, and thus, will be omitted here.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS(Energy Storage System), and can be applied to various devices capable of using a secondary battery, without being limited thereto.

Although the invention has been described in detail with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Symbols]

100: battery module
110: battery cell
120: battery cell stack
200: module frame
200D: recessed part
200R1: first rib
200R2: second rib
300: end plate
300D: recessed part
300R1: first rib
300R2: second rib

## Claims

1. A battery module comprising:
a battery cell stack in which a plurality of battery cells are stacked;
a module frame that houses the battery cell stack and is opened on one surface and the other surface facing each other; and
end plates that cover each of the one surface and the other surface of the module frame,
wherein the module frame includes a first joint surface formed on sides constituting the one surface and the other surface respectively,
wherein the end plate includes a second joint surface j oined to the first joint surface,
wherein a first rib is formed in any one of the end plate and the module frame, with the first rib protruding while being located inner than the portion where the first joint surface and the second joint surface are joined, and a second rib is formed on one surface of the first rib along the protruding direction of the first rib, and
wherein a recessed part is formed in the other one of the end plate and the module frame, with the recessed part having a recessed shape so as to correspond to the first rib and the second rib.

2. The battery module according to claim 1, wherein:
the second rib has a width narrower than that of the first rib and is formed to protrude along the protruding direction of the first rib.

3. The battery module according to claim 1, wherein:
paths that are folded in plural numbers are formed on the surface where the first rib and the second rib face the recessed part.

4. The battery module according to claim 1, wherein:
the recessed part has a recessed shape so as to correspond to a step structure formed at the boundary between the first rib and the second rib.

5. The battery module according to claim 1, wherein:
the first rib and the second rib cover a portion where the first j oint surface and the second joint surface are joined in an internal space of the module frame.

6. The battery module according to claim 1, wherein:
the first rib and the second rib are extended along the direction in which the first joint surface and the second joint surface are extended.

7. The battery module according to claim 1,
further comprising at least one busbar frame that covers one surface or both surfaces of the battery cell stack.

8. The battery module according to claim 7, wherein:
the first rib and the second rib are located between the portion where the first joint surface and the second joint surface are joined and the busbar frame.

9. The battery module according to claim 7, wherein:
a busbar connected to an electrode lead extending from the battery cell is mounted on the busbar frame.

10. The battery module according to claim 1, wherein:
the first rib and the second rib are formed on the end plate,
the recessed part is formed on the module frame, and
the first rib protrudes from the end plate in a direction in which the battery cell stack is located.

11. The battery module according to claim 1, wherein:
the first rib and the second rib are formed on the module frame,
the recessed part is formed on the end plate, and
the first rib protrudes from the module frame in a direction in which the end plate is located.

12. A battery pack comprising the battery module according to claim 1.
